Europäisches Patentamt

European Patent Office

Office européen des brevets

(11) Numéro de publication: 0 344 036
A1

## DEMANDE DE BREVET EUROPEEN

(21) Numéro de dépôt: 89401303.6

(22) Date de dépôt: 10.05.89

(51) Int. Cl.⁴: **H 04 L 11/16**
H 04 L 25/493

(30) Priorité: 24.05.88 FR 8806883

(43) Date de publication de la demande:
29.11.89 Bulletin 89/48

(84) Etats contractants désignés: **DE ES GB IT**

(71) Demandeur: **APRIL S.A.**
**5, Rue du Petit Robinson B.P. 12**
**F-78350 Jouy-en-Josas (FR)**

(72) Inventeur: **Maurel, Jean-François**
**Le Pioch**
**F-81710 Saix (FR)**

**Biehlmann, Dominique**
**La Bréhallerie Saint Mards de Blacarville**
**F-27500 Pont-Audemer (FR)**

(74) Mandataire: **Plaçais, Jean-Yves et al**
**Cabinet Netter 40, rue Vignon**
**F-75009 Paris (FR)**

(54) Procédé et dispositif de transmission d'informations numériques entre différentes stations, du type dit CSMA/CD.

(57) L'invention concerne la transmission d'informations numériques entre différentes stations munies chacune d'une interface possédant un protocole de communication du type CSMA/CD.

Selon une définition générale de l'invention, chaque interface avec le milieu de transmission comprend :
- des moyens de codage (A) propres à substituer à chaque front, montant ou descendant, du signal à émettre sur le milieu, une alternance d'un front montant et d'un front descendant ;
- des moyens de décodage (D) propres à substituer à chaque alternance d'un front montant et d'un front descendant du signal à recevoir sur le milieu, un front montant ou descendant alternativement ; et
- des moyens pour déterminer un front montant initial.

FIG.1

EP 0 344 036 A1

## Description

## Procédé et dispositif de transmission d'informations numériques entre différentes stations, du type dit CSMA/CD.

L'invention concerne la transmission d'informations numériques entre différentes stations.

On connaît déjà des dispositifs de transmission d'informations numériques entre différentes stations munies chacune d'au moins une interface qui les connecte à un milieu de transmission et qui est munie d'un protocole de communication du type dit CSMA/CD (Carrier Sens Multiple Access/Collision Detection) c'est-à-dire "accès multiple avec écoute préalable et détection de collision". Selon ce protocole de communication, chaque interface est capable d'émission/ réception sur le milieu de transmission en mode asynchrone, tout en écoutant en permanence ledit milieu. L'interface ne peut commencer à émettre des informations qu'en l'absence de signal sur le milieu et s'astreint à interrompre son émission s'il apparaît une collision, manifestant un début d'émission simultanée par plusieurs interfaces.

Généralement, les stations sont agencées sous la forme d'un réseau pouvant être un anneau dans lequel le signal transmis, constitué de fronts, montants ou descendants, se propage d'une station à une autre via le milieu de transmission.

Or, la propagation des fronts, montants ou descendants, dans chaque interface, est différente, c'est-à-dire que le temps de montée et de descente des fronts n'est pas rigoureusement équivalente au niveau des moyens émetteur et récepteur de chaque interface, ce qui entraîne au niveau de chaque interface un décalage des fronts, montants ou descendants par rapport aux fronts, montants ou descendants, initiaux.

Ainsi, à chaque passage dans une station, le signal est déformé, ce qui a pour conséquence de limiter le nombre de stations par réseau en vue d'éviter la génération d'une erreur dans le signal transmis.

La présente invention a pour but d'apporter une solution à ce problème.

L'invention offre un procédé de transmission d'informations numériques entre différentes stations, du type dit CSMA/CD, dans lequel :
- chaque station est munie d'au moins une interface qui la connecte à un milieu de transmission ;
- chaque interface est capable d'émission/réception sur ce milieu de transmission, en mode asynchrone, tout en écoutant en permanence ledit milieu, chaque interface ne pouvant commencer à émettre des informations qu'en l'absence de signal sur ledit milieu et s'astreignant à interrompre son émission s'il apparaît une collision, manifestant un début d'émission simultanée par plusieurs interfaces.

Selon une définition générale du procédé selon l'invention, à l'émission, on substitue à chaque front, montant ou descendant, du signal à émettre sur le milieu une alternance d'un front montant et d'un front descendant, tandis qu'à la réception, on substitue à chaque alternance d'un front montant et d'un front descendant du signal à recevoir sur le milieu, un front, montant ou descendant alternativement.

On entend ici par alternance d'un front montant et d'un front descendant, une impulsion de faible durée.

Avantageusement, en présence d'une collision en cours d'émission d'une interface, on module le signal émis par ladite interface.

Selon une mise en oeuvre préférée du procédé selon l'invention, une interface courante possède une ligne d'émission amont et une ligne de réception amont, reliées l'une et l'autre à l'interface placée en amont de ladite interface courante d'une part, et une ligne d'émission aval et une ligne de réception aval, reliées l'une et l'autre à l'interface placée en aval de l'interface courante d'autre part.

De préférence, les lignes d'émission et de réception sont des fibres optiques.

L'invention a également pour objet une dispositif pour la mise en oeuvre du procédé suivant l'invention. Selon une définition générale du dispositif selon l'invention, chaque interface comprend :
- des moyens de codage propres à substituer à chaque front, montant ou descendant, du signal à émettre sur le milieu, une alternance d'un front montant et d'un front descendant ;
- des moyens de décodage propres à substituer à chaque alternance d'un front montant et d'un front descendant du signal à recevoir sur le milieu, un front, montant ou descendant, alternativement, et
- des moyens pour déterminer un front montant initial.

Selon un mode de réalisation préféré du dispositif selon l'invention, chaque interface comprend en outre des moyens de brouillage propres à moduler en présence d'une collision en cours d'émission d'une interface, le signal émis par ladite interface.

Selon un autre aspect de l'invention, une interface courante possède une ligne d'émission amont et une ligne de réception amont, reliées l'une et l'autre à l'interface placée en amont de l'interface courante d'une part, et une ligne d'émission aval et une ligne de réception aval, reliées l'une et l'autre à l'interface placée en aval de l'interface courante d'autre part.

Avantageusement, les lignes d'émission et de réception sont des fibres optiques.

Selon une autre caractéristique du dispositif selon l'invention, les moyens de codage comprennent une porte réalisant la fonction de OU EXCLUSIF, possédant une première entrée recevant chaque front, montant ou descendant, du signal à émettre sur le milieu, et une seconde entrée recevant le signal délivré par un circuit différentiateur dont l'entrée est attaquée par chaque front, montant ou descendant, du signal à émettre sur le milieu, et une sortie délivrant une alternance d'un front montant et d'un front descendant à chaque front, montant ou descendant, attaquant les entrées de ladite porte OU EXCLUSIF.

Selon encore une autre caractéristique du dispositif selon l'invention, les moyens de décodage comprennent une première bascule du type JK possédant une entrée horloge recevant une alternance d'un front montant et d'un front descendant, une entrée de remise à zéro recevant le signal complémenté délivré par la sortie de ladite première bascule via un réseau RC, le signal de sortie de la première bascule attaquant l'entrée horloge d'une seconde bascule du type JK possédant une entrée J et une entrée K à l'état haut logique, la sortie de la seconde bascule délivrant un front montant ou descendant, à chaque alternance d'un front montant et d'un front descendant attaquant son entrée horloge

Selon une autre caractéristique du dispositif selon l'invention, les moyens pour déterminer un front montant initial comprennent un premier monostable possédant une entrée recevant le signal délivré par la sortie de la première bascule, et une sortie attaquant l'entrée d'un second monostable possédant une sortie attaquant l'entrée de mise à zéro de la seconde bascule.

Avantageusement, chaque interface comprend un connecteur propre à recevoir une alimentation externe servant à alimenter ladite interface de l'extérieur lorsque l'alimentation interne de l'interface est en panne.

Avantageusement, chaque interface est supportée par une carte électronique de petite taille propre à être enfichée sur la station associée à l'interface en vue de connecter ladite interface au milieu de transmission.

D'autres caractéristiques et avantages de l'invention apparaîtront à l'examen de la description détaillée ci-après et des dessins annexés, sur lesquels :

- la figure 1 représente schématiquement un dispositif de transmission d'informations numériques entre trois stations, selon l'invention ;
- la figure 2 est une vue schématique de l'interface d'une station intermédiaire d'un anneau ouvert, selon l'invention ;
- la figure 3 est une vue schématique de l'interface d'une station d'extrémité d'un anneau ouvert, selon l'invention ;
- la figure 4 représente schématiquement les moyens de codage du signal à émettre sur le milieu de transmission, selon l'invention ;
- la figure 5 représente des chronogrammes illustrant le fonctionnement des moyens de codage de la figure 4 ;
- la figure 6 représente schématiquement les moyens de décodage du signal à recevoir sur le milieu de transmission et les moyens de détermination d'un front montant initial selon l'invention ; et
- la figure 7 représente des chronogrammes illustrant le fonctionnement des moyens de décodage et des moyens de détermination d'un front montant initial de la figure 6.

Les dessins annexés comportent de nombreux éléments de caractère certain qu'ils peuvent seuls apporter. Ils font donc partie intégrante de la description, pour servir à faire comprendre l'invention, aussi bien qu'à la définir.

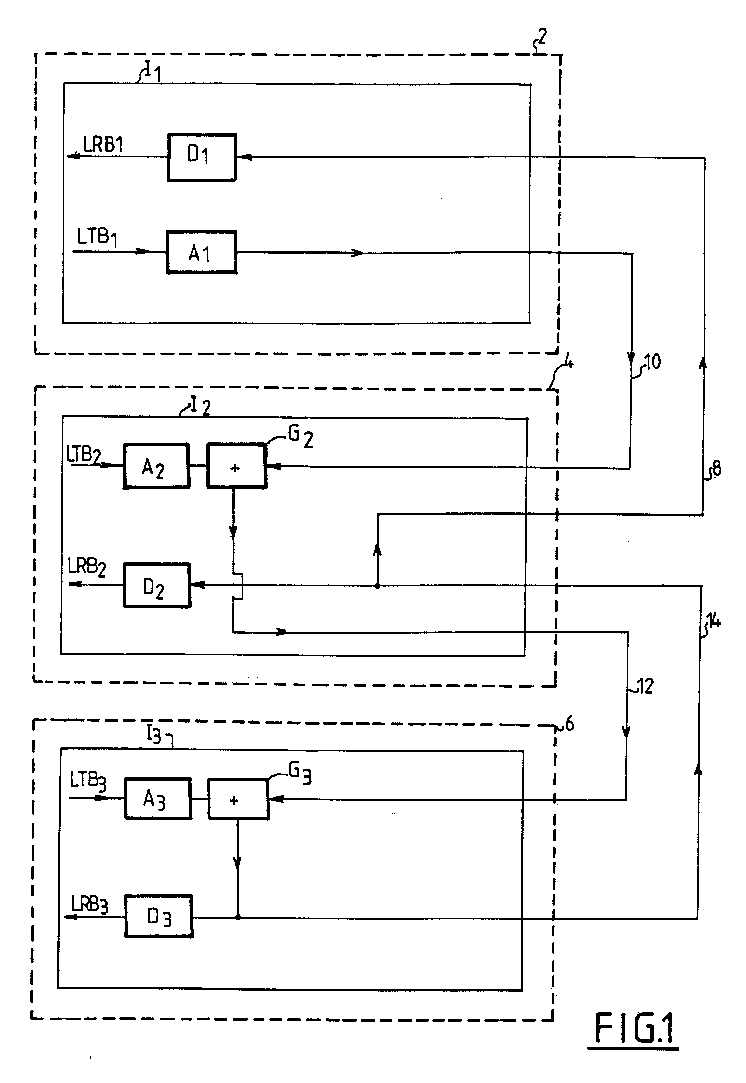

La figure 1 illustre un réseau de transmission d'informations numériques entre trois stations. Le réseau est de type anneau ouvert. A chacune des stations, sont connectés un ou plusieurs équipements automatisés, tels que des capteurs et actionneurs, des contrôleurs/régulateurs, des terminaux informatiques, des ordinateurs.

On a représenté seulement un réseau comprenant trois stations : une station intermédiaire 4 placée entre une station amont d'extrémité 2 et une station aval d'extrémité 6. Bien entendu, le nombre de stations peut être supérieur à trois. Par exemple, les demandeurs ont réalisé un réseau comprenant 16 stations.

Chaque station est munie d'au moins une interface I individualisée en I1,I2,I3 qui la connecte à un milieu de transmission constitué de lignes de transmission.

Avantageusement, chaque interface est supportée par une carte électronique de petite taille (non représentée). Ces cartes électroniques sont enfichées sur leur station respective en vue de connecter les stations sur le milieu de transmission. De telles cartes permettent de changer de technologie sur le milieu (fibre optique, câble coaxial) sans modifier les stations.

Chaque interface est capable d'émission/réception sur ce milieu de transmission en mode asynchrone, tout en écoutant en permanence ledit milieu. Chaque interface ne peut commencer à émettre les informations qu'en l'absence de signal sur ledit milieu, et s'astreint à interrompre son émission s'il apparaît une collision, manifestant un début d'émission simultanée par plusieurs interfaces I.

Chaque interface est capable d'émettre un signal LTB, individualisé en LTB1,LTB2,LTB3, respectivement pour les interfaces I1,I2,I3, et de recevoir un signal LRB individualisé en LRB1,LRB2,LRB3, respectivement pour les interfaces I1,I2,I3.

Les signaux LTB et LRB sont traités par un micro-contrôleur (non représenté) logé dans la station associé à l'interface émettant/recevant ces signaux.

Dans l'exemple illustré en figure 1, il existe deux types d'interface : un interface I2 intermédiaire comprenant deux lignes d'émission et deux lignes de réception, et les interfaces d'extrémité I1 et I3 possédant une ligne d'émission et une ligne de réception.

De façon plus précise, l'interface I2 possède une ligne d'émission amont 8 et une ligne de réception amont 10 reliées l'une et l'autre à l'interface I1 placée en amont de l'interface I2. L'interface I2 comprend également une ligne d'émission aval 12 et une ligne de réception aval 14 reliées l'une et l'autre à l'interface aval I3 placée en aval de l'interface I2.

Les interfaces I1 et I3, du fait de leur position extrême dans le réseau en anneau ouvert, possèdent seulement une ligne d'émission et une ligne de réception ; c'est-à-dire l'interface I1 possède une ligne d'émission 10 reliée à l'interface I2 et une ligne de réception 8 reliée à l'interface I2, tandis que l'interface I3 possède une ligne d'émission 14 reliée à l'interface I2 et une ligne de réception 12 également reliée à l'interface I2.

L'échange d'informations entre les interfaces se fait sur deux lignes de transmission : une ligne de transmission aller et une ligne de transmission retour.

Le cheminement de l'information dans un réseau entre trois stations est le suivant.

Dans l'hypothèse où le logiciel pilotant le réseau de transmission d'informations numériques décide d'envoyer une trame d'informations sur l'interface I1 (extrémité), cette trame est véhiculée par la ligne aller (ligne de transmission 10) jusqu'à l'interface I2 (intermédiaire). L'interface I2 renvoie la somme de ce qu'il reçoit de la ligne aller (ligne de transmission 10) avec le signal d'émission LTB2 local (s'il est actif), vers l'interface I3 (extrémité). Cette somme est véhiculée par la ligne d'émission 12 dans le sens aller.

Des moyens d'aiguillage G individualisés en G2, G3, respectivement pour les interfaces I2, I3, permettent de faire la somme des signaux provenant de la ligne amont (ligne 10 pour G2) avec le LTB local (LTB2 pour G2). Cette somme ou aiguillage s'effectue en fonction des signaux de contrôle, des signaux de détection de collision et de brouillage que l'on décrira ci-après. Les moyens d'aiguillage G sont par exemple constitués de circuits logiques.

L'interface I3 et dernière interface de l'anneau fait également la somme de ce qu'il reçoit de la ligne aller (ligne d'émission 12) avec son LTB3 local (s'il est actif). Au niveau de l'interface I3, on obtient ainsi la somme de tous les LTB du réseau. La dernière interface I3 boucle l'anneau et renvoie cette somme de LTB sur son LRB3 local et sur la ligne retour vers le second interface I2 (ligne de transmission 14). La seconde interface I2 renvoie ce même signal (somme de LTB) sur son LRB2 local et sur la ligne retour vers l'interface I1 via la ligne de réception 8. Enfin, l'interface I1 envoie le signal reçu de la ligne retour 8 sur son LRB1 local.

Dans le domaine des systèmes automatiques et informatiques, les stations peuvent être éloignées d'une distance de l'ordre du kilomètre. Dans ces conditions, les lignes de transmission utilisées sont des fibres optiques qui offrent un affaiblissement linéique plus faible que celui des câbles coaxiaux.

L'échange d'informations entre les interfaces se fait ainsi avec une fibre optique aller et une fibre optique retour.

Selon la principale caractéristique de l'invention, chaque interface comprend des moyens de codage individualisés en A1,A2,A3 respectivement pour les interfaces I1,I2,I3, propres à substituer à chaque front, montant ou descendant, du signal à émettre (LTB1,LTB2,LTB3) sur le milieu MT, une alternance d'un front montant et d'un front descendant, et des moyens de décodage individualisés en D1,D2,D3, propres à substituer à chaque alternance d'un front montant et d'un front descendant du signal à recevoir (LRB1,LRB2,LRB3) sur les lignes de transmission, un front montant ou descendant alternativement.

Ces substitutions à l'émission et à la réception permettent d'éviter la déformation du signal émis/reçu qui est produite systématiquement à chaque interface.

Les explications concernant le fonctionnement du réseau de transmission du type CSMA/CD peuvent être obtenues dans la Demande de Brevet n° déposée par les Demandeurs le même jour que la présente invention. A toutes fins utiles, le contenu descriptif de la Demande n° est à considérer comme incorporé à la présente description.

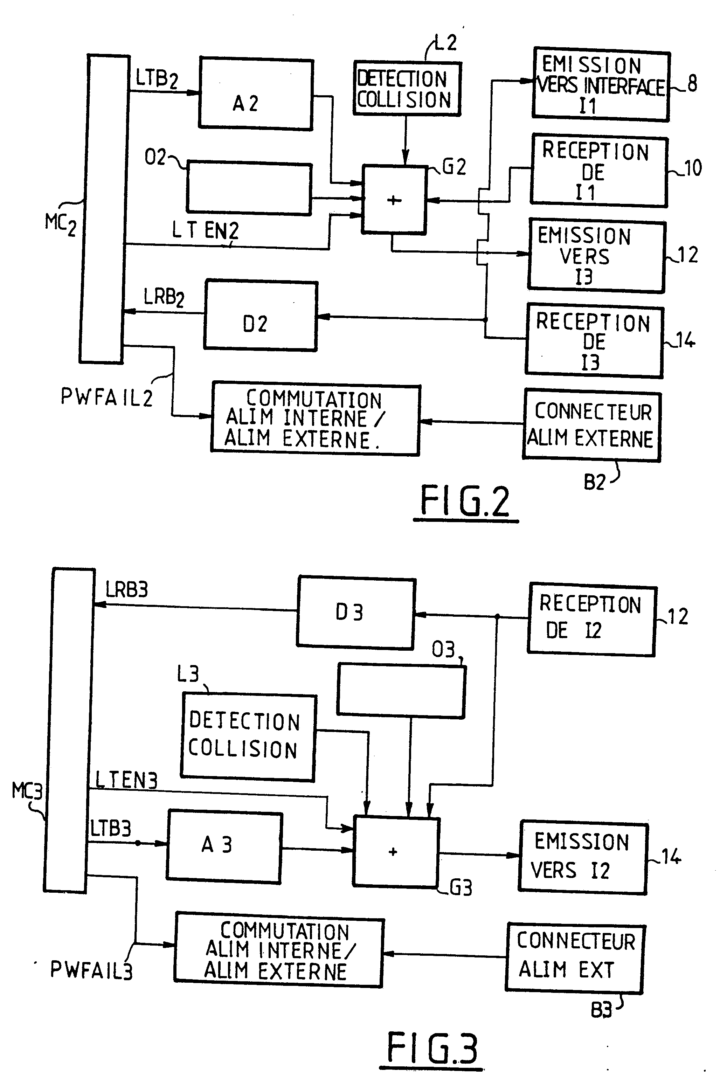

On se réfère maintenant à la figure 2 qui illustre, de façon plus détaillée, une interface I2 de type intermédiaire. L'interface I2 comprend un micro-contrôleur MC2 propre à émettre un signal LTB2 et à recevoir un signal LRB2. Le micro-contrôleur MC2 est, par exemple, du modèle 80C152 vendu par la Société INTEL (Etats-Unis). Le signal LTB2 est codé par des moyens de codage A2 de manière à substituer chaque front, montant ou descendant, du signal à émettre LTB2 sur le milieu, une alternance d'un front montant et d'un front descendant. Cette alternance d'un front montant et d'un front descendant est émis vers l'interface I3 via les moyens d'aiguillage G2 et la ligne de transmission 12.

Ainsi, les signaux véhiculés par la ligne de transmission ou fibre optique 12 sont simplement des alternances d'un front montant et d'un front descendant au lieu de fronts, montants ou descendants.

De façon analogue, l'interface I2 reçoit de l'interface I3, via la fibre de retour 14, une alternance d'un front montant et d'un front descendant, qu'elle décode par l'intermédiaire des moyens de décodage D2 qui sont propres à substituer à chaque alternance d'un front montant et d'un front descendant, un front, montant ou descendant alternativement. Les moyens de décodage D2 reconstituent ainsi le signal à recevoir LRB2, propre à être traité par le micro-contrôleur MC2.

Il faut remarquer que l'alternance d'un front montant et d'un front descendant est renvoyée vers l'interface I1, via la ligne de transmission 8, sans être décodée.

De la même façon, les signaux reçus de l'interface I1 via la fibre aller 10 et les moyens d'aiguillage G2 sont ajoutés au LTB2 local (qui est codé par A2), puis renvoyés vers l'interface I3, via les moyens d'aiguillage G2 et la fibre aller 12.

Du fait de la structure en anneau du réseau optique, il y a régnération systématique des signaux à chaque interface. La continuité de service est assurée de façon active par une alimentation externe (non représentée). Cette alimentation viendra se connecter en face avant des interfaces optiques par l'intermédiaire d'un connecteur B individualisé en B1,B2,B3 respectivement pour les interfaces I1,I2,I3.

La coupure de l'alimentation interne du réseau déclenche un signal de commutation PWFAIL individualisé en PWFAIL1, PWFAIL2,PWFAIL3 respectivement par les interfaces I1,I2,I3. Ces signaux PWFAIL sont délivrés par l'alimentation interne (non représentée) associée à l'interface concernée, et commutent l'alimentation externe (non représentée) connectée à l'interface par l'intermédiaire d'un connecteur B.

Un signal de contrôle LTEN individualisé en LTEN1,LTEN2, LTEN3, respectivement pour les interfaces I1,I2,I3 est délivré par un micro-contrôleur MC associé à son interface respective pour indiquer une émission LTB. Par exemple, un signal LTEN à l'état bas logique indique une émission LTB. Ce signal LTEN est pris en charge par les moyens d'aiguillage G3 en vue d'aiguiller les signaux provenant de l'interface I2.

Chaque interface I possède des moyens de détection des collisions L individualisé en L1,L2,L3 respectivement pour les interfaces I1,I2,I3 manifestant un début d'émission simultanée par plusieurs interfaces, ces moyens actionnent des moyens de brouillage O individualisé en O1,O2,O3, respectivement pour les interfaces I1,I2,I3. Les moyens de brouillage O2 brouillent par exemple le signal émis par l'interface I2 de telle sorte que la collision ne produise pas un signal propre à être pris en considération par les interfaces suivantes. Les moyens de brouillage sont par exemple une combinaison de circuits logiques.

Les signaux de détection et de brouillage délivrés respectivement par les moyens de détection L et de brouillage O sont traités par les moyens d'aiguillage G en vue de permettre la transmission des informations numériques entre les différentes stations.

On se réfère maintenant à la figure 3 qui illustre d'une façon détaillée une interface de type interface d'extrémité, par exemple I3. On y retrouve le micro-contrôleur MC3 propre à délivrer des signaux LTEN3 indiquant l'état d'activité du signal LTB3. On y retrouve les moyens de codage des fronts A3 propres à substituer à chaque front, montant ou descendant, du signal à émettre LTB3 sur la ligne de transmission 14 vers l'interface I2, une alternance d'un front montant et d'un front descendant. On y retrouve bien entendu les moyens de décodage des fronts D3 propres à substituer à chaque alternance d'un front montant et d'un front descendant, du signal à recevoir de I2, un front montant ou descendant LRB3 alternativement.

On y retrouve aussi un connecteur d'alimentation externe B3 propre à connecter une alimentation externe qui servira à alimenter l'interface I3 si l'alimentation interne du réseau est en panne. (PWFAIL3 est à l'état bas logique par exemple en cas de coupure).

Chaque interface d'extrémité, par exemple l'interface I3, possède également des moyens de brouillage O3, propres à brouiller le signal émis par l'interface I3 en cas d'une collision avec un signal reçu de l'interface I2.

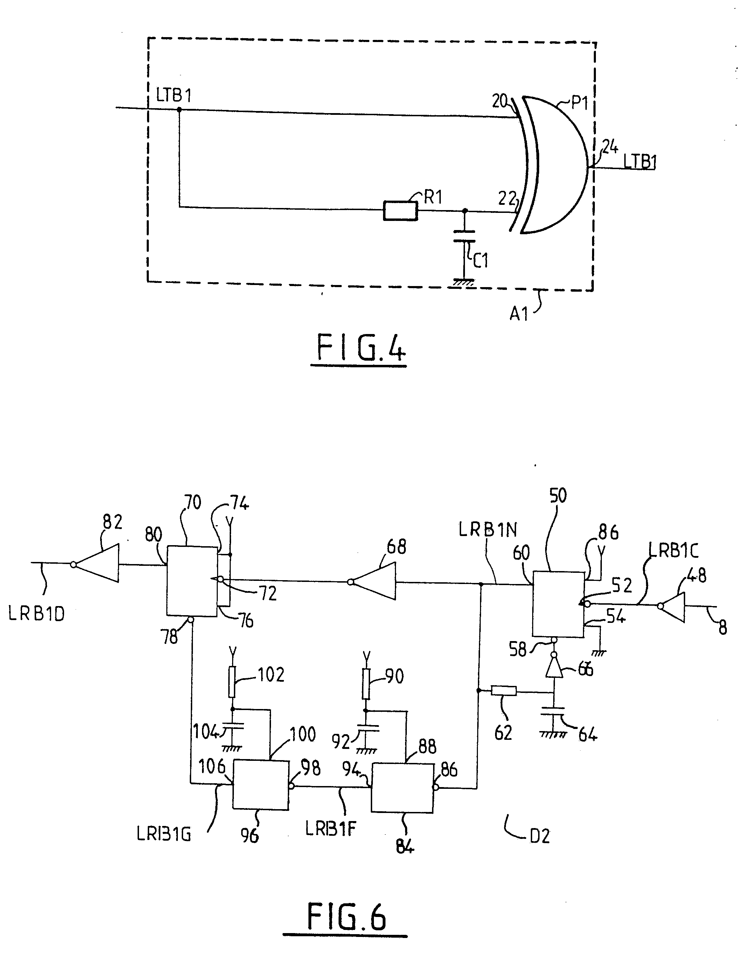

On se réfère maintenant à la figure 4 qui représente, d'une façon schématique, les moyens de codage des fronts. On a représenté sur la figure 4 les moyens de codage A1 de l'interface I1. Les moyens de codage A1 comprennent une porte OU EXCLUSIF P1 possédant une première entrée 20 recevant le signal à émettre LTB1. La porte OU EXCLUSIF P1 comprend également une seconde entrée 22 recevant le signal délivré par un circuit différentiateur du type R1-C1, dont l'entrée est attaquée par chaque front, montant ou descendant, du signal à émettre LTB1 sur la ligne d'émission 10.

La porte OU EXCLUSIF comprend une sortie 24 délivrant une alternance d'un front montant et d'un front descendant LTB1C à chaque front montant ou descendant attaquant son entrée 20.

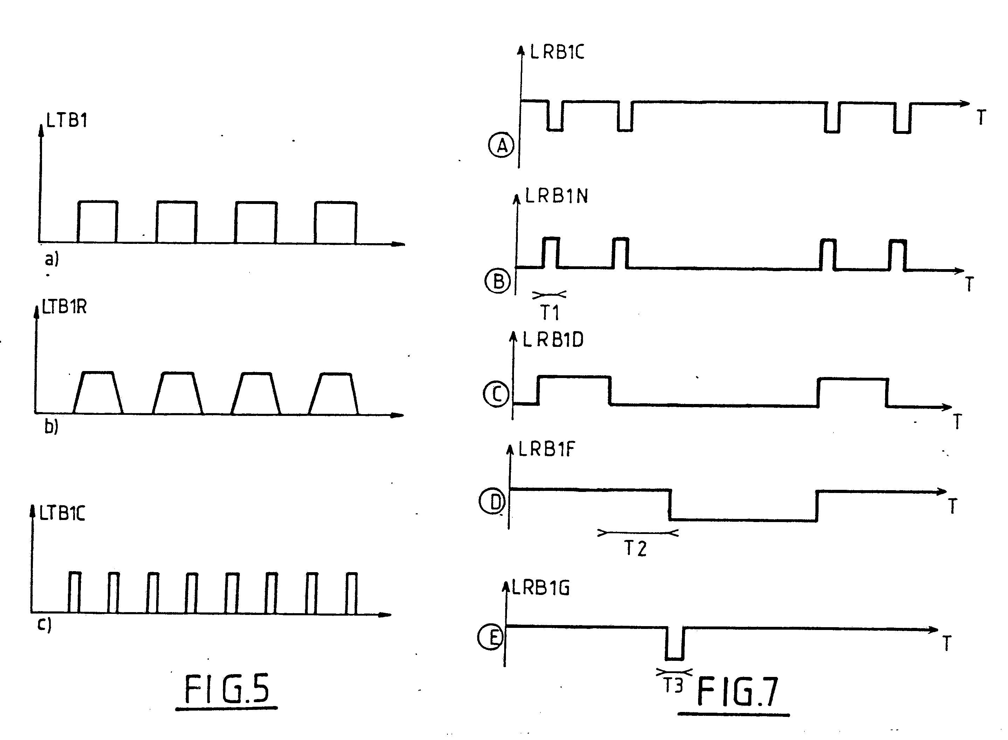

On se réfère maintenant à la figure 5 qui représente des chronogrammes illustrant le fonctionnement des moyens de codage A1.

Sur la partie A de la figure 5, on a représenté le chronogramme du signal LTB1. Il s'agit d'un signal rectangulaire.

Sur la partie B de la figure 5, on a représenté le chronogramme du signal LTB1R délivré par le circuit différen tiateur de type R1-C1. Il s'agit d'un signal à dents de scie. La constante de temps T est égale à 120 nanosecondes avec R = 1,8 kiloohms et C = 100 picofarads.

Sur la partie C de la figure 5, on a représenté l'alternance d'un front montant et d'un front descendant LTB1C, obtenue à la sortie de la porte exclusive 24.

On se réfère maintenant à la figure 6 qui illustre, d'une façon détaillée, les moyens de décodage D, par exemple les moyens de décodage D2 de l'interface I2 et les moyens propres à déterminer un front montant initial.

Les moyens de décodage D2 comprennent une première bascule 50 du type JK possédant une entrée horloge 52 recevant une série d'alternances d'un front montant et d'un front descendant LRB1C (série d'impulsions) reçue de l'interface I2 via la ligne de transmission 8 et via un circuit inverseur 48.

L'entrée K de mise à zéro synchrone 54 est mise à la masse tandis que l'entrée J de mise à un synchrone 56 est à l'état haut logique. L'entrée "clear" de mise à zéro asynchrone 58 reçoit le signal délivré par la sortie 60 via un réseau résistance 62-capacité 64 possédant une constante de temps T1 de 120 nanosecondes et via un inverseur 66. Sous la commande de l'entrée 58, la bascule 50 délivre ainsi à sa sortie 60 une série d'alternances d'un front montant et d'un front descendant d'une durée de 120 nanosecondes (série d'impulsions de 120 nanosecondes) LRB1N. La bascule 50 a pour but de remettre en forme le signal d'entrée LRB1C susceptible d'être déformé par sa transmission entre plusieurs stations via le milieu de transmission.

Le signal LRB1N délivré par la sortie 60 de la bascule 50 attaque l'entrée horloge 72 d'une seconde bascule 70 de type JK via un inverseur 68. L'entrée K de mise à zéro synchrone 74 ainsi que l'entrée J de mise à un synchrone 76 sont à l'état haut logique.

La sortie 80 de la bascule 70 délivre un signal LRB1D via un inverseur 82. Le signal LRB1D représente le signal décodé par les moyens de décodage D2.

L'entrée "clear" de mise à zéro asynchrone 78 est attaquée par le signal LRB1N ayant été traité par des moyens propres à déterminer un front montant initial comprenant un premier monostable 84 et un second monostable 96.

Plus précisément, le signal LRB1N attaque l'entrée 86 du monostable 84 possédant un réseau résistance 90-capacité 92 branché à son entrée 88. Le réseau 90-92 a une constante de temps T2 de 1,2 micro-secondes. Le signal LRB1F délivré par la sortie 94 du monostable 84 attaque l'entrée 98 du monostable 96 possédant un réseau résistance 102-capacité 104 branché à son entrée 100. Le réseau 102-104 a une constante de temps T3 de 100 nanosecondes. Le signal LRB1G délivré par la sortie 106 du monostable 96 attaque l'entrée 78 de la bascule 70.

On se réfère maintenant à la figure 7 qui représente des chronogrammes illustrant le fonctionnement des moyens de décodage D2 et des moyens de détermination d'un front montant initial 84-96 décrits en référence à la figure 6.

Sur la partie A de la figure 7, on a représenté l'alternance d'un front montant et d'un front descendant LRB1C. Il s'agit d'un signal de type impulsionnel.

Sur la partie B de la figure 7, on a représenté le signal LRB1N délivré par la sortie 60 de la bascule 50. Il s'agit d'un signal de type impulsionnel dont la durée T1 de chaque impulsion est de 120 nanosecondes.

Sur la partie C de la figure 7, on a représenté le signal LRB1C délivré par la sortie 80 de la bascule 70 via l'inverseur 82. Il s'agit d'un signal rectangulaire. A la première impulsion LRB1N, reçue par l'entrée horloge 72, la sortie 80 de la bascule 70 commute et passe de l'état bas logique à l'état haut logique. La sortie 80 est maintenue à l'état haut logique jusqu'à la prochaine impulsion car les entrées 74 et 76 sont à l'état haut logique.

Sur la partie D de la figure 7, on a représenté le signal LRB1F délivré par la sortie 94 du monostable 84. Il s'agit d'un créneau (passage de l'état haut logique à l'état bas logique) déclenché par la première impulsion du signal LRB1N reçu par l'entrée 86 du monostable 84 après une durée T2 de 1,2 micro-secondes. Le créneau repasse de l'état bas logique à l'état haut logique à la seconde impulsion du signal LRB1N.

Sur la partie E de la figure 7, on a représenté le signal LRB1G délivré par la sortie 106 du monostable 96. Il s'agit d'une impulsion d'une durée T3 de 100 nanosecondes passant de l'état haut logique à l'état bas logique à l'impulsion LRB1F. L'impulsion LRB1G attaque l'entrée "clear" de la bascule 70 de manière à mettre à zéro le signal LRB1N. L'action combinée des deux monostables permet ainsi de déterminer un front montant initial.

**Revendications**

1. - Procédé de transmission d'informations numériques entre différentes stations, du type dit CSMA/CD, dans lequel :
- chaque station est munie d'au moins une interface (I) qui la connecte à un milieu de transmission ;
- chaque interface (I) est capable d'émission/réception sur ce milieu de transmission, en mode asynchrone, tout en écoutant en permanence ledit milieu, chaque interface (I) ne pouvant commencer à émettre des informations qu'en l'absence de signal sur ledit milieu et s'astreignant à interrompre son émission s'il apparaît une collision, manifestant un début d'émission simultanée par plusieurs interfaces, caractérisé en ce qu'à l'émission, on substitue à chaque front, montant ou descendant, du signal à émettre sur le milieu, une alternance d'un front montant et d'un front descendant, tandis qu'à la réception, on substitue à chaque alternance d'un front montant et d'un front descendant du signal à recevoir sur le milieu, un front montant ou descendant alternativement.

2. - Procédé selon la revendication 1, caractérisé en ce qu'en présence d'une collision en cours d'émission d'une interface (I), on module le signal émis par ladite interface (I).

3. - Procédé selon l'une quelconque des revendications 1 et 2, caractérisé en ce qu'une interface courante possède une ligne d'émission amont et une ligne de réception amont, reliées l'une et l'autre à l'interface placée en amont de ladite interface courante d'une part, et une ligne d'émission aval et une ligne de réception aval, reliées l'une et l'autre à l'interface placée en aval de l'interface courante d'autre part.

4. - Procédé selon la revendication 3, caractérisé en ce que les lignes d'émission et de réception sont des fibres optiques.

5. - Dispositif pour la mise en oeuvre du procédé selon l'une des revendications précédentes, caractérisé en ce que chaque interface comprend :
- des moyens de codage (A) propres à substituer à chaque front, montant ou descendant, du signal à émettre sur le milieu, une alternance d'un front montant et d'un front descendant ;
- des moyens de décodage(D) propres à substituer à chaque alternance d'un front montant et d'un front descendant du signal à recevoir sur le milieu, un front montant ou descendant alternativement ; et
- des moyens (84,96) pour déterminer un front montant initial.

6. - Dispositif selon la revendication 5, caractérisé en ce que chaque interface comprend en outre des moyens de brouillage O propres à moduler en présence d'une collision en cours d'émission de l'interface, le signal émis par ladite interface.

7. - Dispositif selon l'une des revendications 5 et 6, caractérisé en ce qu'une interface courante possède une ligne d'émission amont et une ligne de réception amont, reliées l'une et l'autre à l'interface placée en amont de l'interface courante d'une part, et une ligne d'émission aval et une ligne de réception aval, reliées l'une et l'autre à l'interface placée en aval de l'interface courante, d'autre part.

8. - Dispositif selon la revendication 7, caractérisé en ce que les lignes d'émission et de réception sont des fibres optiques.

9. - Dispositif selon la revendication 5, caractérisé en ce que les moyens de codage A comprennent une porte réalisant la fonction OU EXCLUSIF (P1), possèdant une première entrée (20) recevant chaque front, montant ou descendant, du signal à émettre sur le milieu, une seconde entrée (22) recevant le signal délivré par un circuit différentiateur (R1-C1) dont l'entrée est attaquée par chaque front, montant ou descendant, du signal à émettre sur le milieu, et une sortie (24) délivrant une alternance d'un front montant et d'un front descendant, à chaque front montant ou descendant attaquant ses entrées (20,22).

10. - Dispositif selon la revendication 5, caractérisé en ce que les moyens de décodage (D) comprennent une première bascule de type JK (50) possédant une entrée horloge (52) recevant une alternance d'un front montant et d'un front descendant, une entrée de remise à zéro (58) recevant le signal complémenté délivré par la sortie (60) de ladite première bascule (50) via un réseau (62,64), le signal de sortie (60) de la première bascule (50) attaquant l'entrée horloge (72) d'une seconde bascule de type JK (70) possédant deux entrées (74 et 76) à l'état haut logique, la sortie (80) de la seconde bascule (70) délivrant un front, montant ou descendant, à chaque alternance d'un front montant et d'un front descendant attaquant son entrée horloge (72).

11. - Dispositif selon la revendication 5 et la revendication 10, caractérisé en ce que les moyens pour déterminer un front montant initial (84-96) comprennent un premier monostable (84) possédant une entrée (86) recevant le signal délivré par la sortie (60) de la première bascule (50), et une sortie (94) attaquant l'entrée (98) d'un second monostable (96) possédant une sortie (106) attaquant l'entrée de mise à zéro (78) de la seconde bascule (70).

12. - Dispositif selon l'une quelconque des précédentes revendications 5 à 11, caractérisé en ce que chaque interface (I) comprend un connecteur (B) propre à recevoir une alimentation externe servant à alimenter ladite interface de l'extérieur lorsque l'alimentation interne de l'interface est en panne.

13. - Dispositif selon l'une quelconque des précédentes revendications 5 à 12, caractérisé en ce que chaque interface est supportée par une carte électronique de petite taille propre à être enfichée sur la station associée à l'interface en vue de connecter ladite interface au milieu de transmission.

FIG.1

## FIG.2

## FIG.3

## FIG.4

## FIG.6

LTB1

a)

LTB1R

b)

LTB1C

c)

## FIG.5

LRB1C

Ⓐ T

LRB1N

Ⓑ T

T1

LRB1D

Ⓒ T

LRB1F

Ⓓ T

T2

LRB1G

Ⓔ T

T3 **FIG.7**

EP 0 344 036 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 063 220 (METCALFE) <br> * Colonne 2, ligne 51 - colonne 3, ligne 31; figure 1 * | 1 | H 04 L 11/16 <br> H 04 L 25/493 |
| A | --- | 2,4 | |
| Y | LASER/FOCUS/ELECTRO-OPTICS, vol. 21, no. 3, mars 1985, pages 100-102, Littleton, Massachusetts, US; W.V. SUBBARAO: "Simple through-air IR transmitter and receiver" * Figures 1,2 * | 1 | |
| A | IDEM <br> --- | 5,10-11 | |
| A | ELECTRONICOM'85, session no. 7, papier no. 85074, 6-11 octobre 1985, pages 170-176, IEEE, New York, US; M.E. ULUG: "A fiber optic contention bus with implicit token passing" * Page 170, colonne de droite, lignes 11-29; page 172, lignes 11-12; figures 1,2 * <br> --- | 1-4,6-8 | |
| A | US-A-4 646 361 (USUI) * Colonne 2, lignes 40-44 * <br> ----- | 1,2,6 | **DOMAINES TECHNIQUES RECHERCHES (Int. Cl.4)** <br> H 04 L |

Le présent rapport a été établi pour toutes les revendications

| Lieu de la recherche | Date d'achèvement de la recherche | Examinateur |
|---|---|---|
| LA HAYE | 01-09-1989 | DE LA FUENTE DEL AGUA P. |